# EUROPÄISCHE PATENTSCHRIFT

(11) **EP 1 208 369 B1**
(45) Veröffentlichungstag und Bekanntmachung des Hinweises auf die Patenterteilung: **02.04.2008**
(21) Anmeldenummer: 01960113.7
(22) Anmeldetag: 06.07.2001
(51) Int. Cl.: G01N 21/954, G02B 23/24

(54) **OPTISCHE MESSVORRICHTUNG**
OPTICAL MEASURING SYSTEM
DISPOSITIF DE MESURE OPTIQUE

(30) Priorität: 11.08.2000 DE 10039239; 03.07.2001 DE 10131778
(43) Veröffentlichungstag der Anmeldung: 29.05.2002
(73) Patentinhaber: ROBERT BOSCH GMBH, 70442 Stuttgart (DE)
(72) Erfinder: LINDNER, Michael, 71397 Leutenbach (DE); THOMINET, Vincent, CH-1110 Morges (CH)
(86) Internationale Anmeldenummer: PCT/DE2001/002518
(87) Internationale Veröffentlichungsnummer: WO 2002/014845

(56) Entgegenhaltungen:
- WO-A-00/10047
- DE-A- 3 430 013
- DE-A- 19 618 558
- DE-A- 19 806 261
- DE-U- 7 819 433
- US-A- 4 976 524
- US-A- 6 069 698

## Beschreibung

Die Erfindung bezieht sich auf eine optische Messvorrichtung mit einer 3D-Messeinrichtung zur dreidimensionalen Formvermessung an Oberflächen von Messobjekten und einer eine Objektivoptik aufweisenden Projektionsoptik, wobei das Messobjekt durch eine Lichtquelle über einen Beleuchtungsstrahlengang mit einer Beleuchtungsoptik beleuchtet wird und die 3D-Messeinrichtung als eine interferometrische Messeinrichtung ausgebildet ist.

### Stand der Technik

Derartige optische Messvorrichtungen sind z. B. als interferometrische Messvorrichtungen, die auf einer Auswertung von Phase bzw. Laufzeit der Strahlung beruhen, oder als auf dem Triangulationsverfahren beruhende Messvorrichtungen (z. B. Streifenprojektion) bekannt, bei denen die Messung in Abhängigkeit von einem Beobachtungswinkel und der Beleuchtungsrichtung vorgenommen wird.

Bei den interferometrischen Verfahren sind solche der klassischen Interferometrie (s. z. B. A. Donges, R. Noll in "Lasermesstechnik", Hüthig Verlag 1993), der Weißlichtinterferometrie, bei denen Lichtquellen kurzer Kohärenzlänge (z. B. Leuchtdiode, Superlumineszenzdiode) verwendet werden (vgl. P. de Groot, L. Deck, "Surface profiling by analysis of white-light interferograms in the spatial frequency domain" J. Mod. Opt., Vol. 42, No. 2, 389-401, 1995; Th. Dresel, G. Häusler, H. Venzke; "Three-dimensional sensing of rough surfaces by coherence radar", Appl. Opt., Vol. 31, No. 7, 919-925, 1992; DE 1988 48 813.4 und DE 100 15 878.1) und der Heterodyninterferometrie (s. z. B. DE 197 21 842 C2; H.J. Tiziani, "Optical methods for precision measurements", Optical and Quantum Electronics, Vol. 21, 253-282; K. Creath, "Temporal phase measurement method" in D.W. Robinson, T.G. Reid: Interferogram Analysis IOP Publishing Bristol 1993; R. Onodera, Y. Ishii, "Two-wavelength interferometry that uses a Fourier-transform method", Appl. Opt., Vol. 37, No. 34, 7988-7994, 1998) zu unterscheiden.

Wie z. B. in den beiden genannten, nicht vorveröffentlichten deutschen Patentanmeldungen 199 48 813.4 und 100 15 878.1 sowie weiterhin auch in den beiden nicht vorveröffentlichten deutschen Patentanmeldungen 100 33 027.4 und 100 33 028.2 erwähnt, die sich ebenfalls mit der Weißlichtinterferometrie befassen, ist es bisher schwierig, größere Flächenbereiche, insbesondere in engen Hohlräumen, schnell und hoch auflösend zu vermessen. Beispielsweise ist es bei Objekten mit sehr kleinen Kegelwinkeln oft nicht möglich, diese mittels Interferometer, die mit einem ebenen Gesichtsfeld arbeiten, zu vermessen, da kein Licht in das Objektiv zurückgestreut wird. Mit einem Endoskop können Kegel- oder Zylinderflächen nur in kleinen Ausschnitten gemessen werden. Die Messungen der gesamten Fläche sind zeitaufwändig, da viele einzelne Ausschnitte gemessen werden müssen.

Bei einer in der DE 198 06 261 A1 gezeigten optischen Messvorrichtung wird eine Oberfläche in einem Hohlraum über eine Abbildungsoptik aus einer Tunnelperspektive erfasst, und die auf einem Bildwandler erhaltenen Bilder werden einschließlich der Verzerrungen der Abbildungsoptik nachfolgend elektronisch in ebener Darstellung angezeigt.

Die WO 00/10047 A1 zeigt eine optische Messvorrichtung, mit der z.B. Innenflächen von Röhren in ihrem Innenumfang vermessen werden können, wobei ein gesamter Umfangsbereich erfasst und dargestellt wird. Hierbei geht es um relativ grobe Messungen, wobei z.B. in Abständen von 10 cm zur optischen Achse noch Genauigkeiten von weniger als 0,5mm gemessen werden können.

Weitere optische Messvorrichtungen, mit denen Oberflächen in Hohlräumen bzw. Tieflochbohrungen untersucht werden können, sind in der DE 196 18 558 A1, der DE 34 30 013 A1, der DE 78 19 433 U1 und der US 4,976,524 gezeigt.

Der Erfindung liegt die Aufgabe zugrunde, eine optische Messvorrichtung der eingangs genannten Art bereit zu stellen, mit der größere zusammenhängende Oberflä-chenbereiche von Messobjekten schnell und hoch auflösend vermessen werden können.

### Vorteile der Erfindung

Diese Aufgabe wird mit den Merkmalen des Anspruches 1 gelöst. Hiernach ist vorgesehen, dass die Objektivoptik als Bildebnungsoptik zum Erfassen und Ebnen eines gekrümmten Oberflächenbereiches (z. B. Sattelfläche, Kegelsegment) oder als Rundsichtoptik zum Erfassen eines um 360° umlaufenden radialsymmetrischen Oberflächenbereichs ausgebildet ist und dass der erfasste Oberflächenbereich in einer Ebene als geebnetes Bild als geebnetes Zwischenbild abgebildet wird. Der zu messende Oberflächenbereich, der mit der Beleuchtungsoptik beispielsweise auch an schwer zugänglichen Stellen einfach und definiert beleuchtet wird, wird mit der Rundsichtoptik zusammenhängend und damit hoch auflösend und schnell erfasst und mit der Messeinrichtung dreidimensional vermessen. Hierbei können Oberflächenungenauigkeiten, z. B. ungewünschte Rauhigkeit, ungenaue zylindrische Bohrungen oder kegelförmige Ventilsitze und auch Übergangsbereiche zwischen kegelförmigen Ventilsitzen und zylindrischen Flächen, aber auch nicht nur derartige, sich in Tiefenrichtung erstreckende Oberflächen, sondern auch flache Bereiche ausgemessen werden. Mit der Bildebnungsoptik kann insbesondere ein stark gekrümmter Oberflächenbereich, z. B. ein stark gekrümmter Abschnitt eines Ventilsitzes vermessen werden.

Eine einfache und dabei genaue und schnelle Messung wird dadurch unterstützt, dass die Beleuchtungsoptik, die die Rundsichtoptik oder die Bildebnungsoptik und weitere Optiken enthält, derart ausgebildet ist, dass die das Messobjekt beleuchtende Wellenfront an die Geometrie des Oberflächenbereiches angepasst ist, so dass die Beleuchtungsstrahlen senkrecht auf den Oberflächenbereich auftreffen.

Alternativ vorteilhafte Ausgestaltungen bestehen darin, dass die Rundsichtoptik oder die Bildebnungsoptik entsprechend einem Weitwinkelobjektiv mit einer Winkelvergrößerung wesentlich größer als Eins und als telezentrische Anordnung ausgestaltet ist oder dass die Rundsichtoptik oder die Bildebnungsoptik als Normaloptik mit einer Winkel- und Linearvergrößerung von Eins und einer Ablenkungsanordnung ausgebildet ist. Bei der Weitwinkeloptik mit telezentrischer Anordnung kann die Aperturblende außerhalb der Rundsichtoptik liegen, und objektseitig kann jeder Strahl eine andere Pupille besitzen. Dadurch werden die parallelen Strahlen der bildseitigen Seite auf der objektseitigen Seite in Strahlen umgewandelt, die senkrecht auf z. B. einer Kegelfläche (oder Zylinderfläche) sind.

Eine weitere vorteilhafte Ausgestaltung besteht darin, dass die Ablenkungsanordnung als Axicon ausgebildet ist, das als ein rotationssymmetrisches Prisma oder ein rotationssymmetrischer Spiegel ausgelegt ist. Zur Auslegung von Axicons an sich wird auf J.H. McLeod, "Axicons and their uses", J.Opt. Soc. Am., Vol. 50, No. 2, 166-169, 1960 sowie auf G. Schröder, "Technische Fotographie", Vogel-Verlag, 74-77, 1981 verwiesen.

Verschiedene geeignete Gestaltungsmöglichkeiten der Rundsichtoptik oder der Bildebnungsoptik bestehen darin, dass die Rundsichtoptik oder die Bildebnungsoptik mit sphärischen, asphärischen oder Grin-Linsen, Stablinsen, mit diffraktiven optischen Elementen, Prismen, Spiegeln oder mit einer Kombination aus einem Teil oder allen diesen Komponenten gestaltet ist.

Alternative vorteilhafte Möglichkeiten für den Aufbau bestehen weiterhin darin, dass die 3D-Messeinrichtung als eine interferometrische Messeinrichtung beruhende Messeinrichtung ausgebildet ist, und weiterhin darin, dass die interferometrische Messeinrichtung als an sich bekanntes normales Interferometer, Heterodyninterferometer oder Weißlichtinterferometer, das eine kurzkohärente Lichtquelle aufweist, ausgebildet ist.

Vorteilhafte Maßnahmen zur Anordnung der Messvorrichtung bezüglich des Objektes und zur Durchführung der Messung ergeben sich dadurch, dass das Weisslichtinterferometer einen Objektarm, in dem die Rundsichtoptik oder die Bildebnungsoptik angeordnet ist und über den zumindest teilweise der Beleuchtungsstrahlengang verläuft, und einen Referenzarm mit einem Referenzspiegel aufweist und dass der Referenzarm und der Objektarm sich voneinander räumlich getrennt erstrecken oder räumlich ineinander in einer Common-Path-Anordnung integriert sind. Ist dabei vorgesehen, dass das Weisslichtinterferometer in ein Modulationsinterferometer und ein daran über eine Faseroptik oder eine Freistrahloptik angekoppeltes Sondeninterferometer mit der Rundsichtoptik unterteilt ist, so wird die Handhabung weiterhin begünstigt.

Zur Kompensation der Rundsichtoptik bzw. der Bildebnungsoptik kann im Referenzarm eine der Rundsichtoptik bzw. der Bildebnungsoptik ähnliche oder entsprechende Optik eingesetzt werden.

Verschiedene Ausgestaltungsmöglichkeiten, die je nach Messaufgabe unterschiedliche Vorteile haben und geeignet gewählt werden können, ergeben sich dadurch, dass eine relative Änderung der optischen Weglänge zwischen Objektlichtweg und Referenzlichtweg bei dem Weisslichtinterferometer auf unterschiedliche Arten erfolgen kann, z.B. durch Bewegen eines Referenzspiegels, durch Bewegen des Objektes, durch Bewegen des Interferometers, durch Änderung der optischen Weglänge im Referenzarm mittels eines akustooptischen Modulators oder durch Tiefenabtastung des Zwischenbildes.

Vielfältige Möglichkeiten, auf einfache Weise verschiedene Oberflächen auch an schwer zugänglichen Stellen zu vermessen, werden weiterhin dadurch geboten, dass sich im Objektarm eine bezüglich des Messobjekts starre Optik befindet und dass der starren Optik eine in Richtung ihrer optischen Achse bewegliche Optik folgt. Dabei kann bei guter Handhabung auch in engen Hohlräumen eine relativ große laterale Auflösung dadurch erzielt werden, dass die starre Optik ganz oder teilweise als Endoskop ausgebildet ist.

Mit der Maßnahme, dass die starre Optik Teil einer das Zwischenbild erzeugenden Optik ist, wird der Aufwand, die Messvorrichtung an verschiedene Messaufgaben anzupassen, weiterhin wesentlich begünstigt. Vorteilhaft ist beispielsweise eine Ausbildung, bei der die starre Optik Teil der Rundsichtoptik bzw. Bildebnungsoptik ist.

Zum Erreichen einer gegen laterale Relativbewegung des Messobjektes robusten Messung ist vorteilhaft vorgesehen, dass die starre Optik das Messobjekt nach Unendlich abbildet.

Zur Genauigkeit der Messung tragen die Maßnahmen bei, dass ein Bild der Referenzebene des Referenzarms im Schärfentiefenbereich der Rundsichtoptik oder der Bildebnungsoptik liegt. Hierbei ist es vorteilhaft, dass das Bild der Referenzebene in der Bildebene der Rundsichtoptik oder der Bildebnungsoptik liegt, und weiterhin, dass sich das Bild der Referenzebene bei Bewegung der beweglichen Optik synchron mit der Bildebene der Rundsichtoptik oder Bildebnungsoptik bewegt.

Eine weitere vorteilhafte Ausgestaltung der Erfindug ergibt sich dadurch, dass die starre Optik als Rundsichtoptik oder Bildebnungsoptik ausgebildet ist, mit der mindestens ein zum Messobjekt starres Zwischenbild erzeugt wird, und dass als bewegliche Optik eine im Strahlengang hinter dem starren Zwischenbild folgende Objektivoptik in Richtung ihrer optischen Achse beweglich zur Abtastung des normal zu dieser Achse ausgerichteten Zwischenbilds in Tiefenrichtung und Abbilden desselben direkt oder über eine oder mehrere Zwischenabbildungen auf dem Bildaufnehmer ausgebildet ist. Durch die Erzeugung des z.B. im Objektlichtweg liegenden starren Zwischenbilds der Objektoberfläche mit der starren Zwischenbildabbildungsvorrichtung in Form der Rundsichtoptik bzw. Bildebnungsoptik in dem Objektlichtweg wird auch in engen Kanälen oder Bohrungen die zu messende Objektoberfläche mit relativ großer lateraler Auflösung erfassbar und mit dem Bildaufnehmer und der nachgeschalteten Auswerteeinrichtung hinsichtlich der Tiefenstruktur auswertbar. Die Abtastung des starren Zwischenbildes ist mit relativ einfachen Maßnahmen möglich, da zu seiner Tiefenabtastung nur wenige optische Komponenten des Objektlichtweges bewegt werden müssen, wobei die jeweils abgetastete Tiefe des starren Zwischenbilds stets im Schärfentiefenbereich der beweglichen Objektivoptik bleibt, da durch die Tiefenabtastung (Tiefenscan) die Objektebene der bewegten Objektivoptik gleichsam durch das starre Zwischenbild hindurch bewegt wird und auf diese Weise z.B. die Interferenzmaxima im Bereich größter Schärfentiefe ausgewertet werden. Darüber hinaus ist das starre Zwischenbild stets normal zur Bewegungsrichtung der Objektivoptik mit der Rundsichtoptik bzw. Bildebnungsoptik ausgerichtet bzw. ausrichtbar.

Die Abbildungsqualität und die Genauigkeit der Auswertung werden dadurch begünstigt, dass die Zwischenabbildung einen für alle im Zwischenbild abgebildeten Objektpunkte den gleichen Abbildungsmaßstab besitzt. Ein vorteilhafter Aufbau besteht dabei darin, dass die starre Optik als 4f-Anordnung ausgebildet ist.

Bezüglich näherer Ausführungen zur starren Optik und beweglichen Optik sei auf die Ausführungsbeispiele in der deutschen Patentanmeldung Nr. 101 15 524 hingewiesen, die bei vorliegendem Anmeldungsgegenstand entsprechend übernommen werden können.

Eine weitere Anpassungsmöglichkeit der Messvorrichtung an eine gegebene Oberflächenstruktur des Messobjektes wird dadurch erhalten, dass mindestens zwei Rundsichtoptiken oder Bildebnungsoptiken vorgesehen und derart ausgelegt sind, dass gleichzeitig von mindestens zwei Oberflächenbereichen ein geebnetes Bild oder Zwischenbild erzeugbar ist, wobei in dem Referenzarm eine Referenzebene vorgesehen ist und die Auswertung der Bilder oder der Zwischenbilder zeitlich aufeinander folgend erfolgt oder eine der Anzahl der Rundsichtoptiken oder Bildebnungsoptiken entsprechende Anzahl von zugeordneten Referenzebenen vorgesehen sind und die Auswertung synchron erfolgt.

Unter Verwendung der Rundsichtoptik oder der Bildebnungsoptik wird die Oberfläche des Objektes nahezu senkrecht beleuchtet und beobachtet, so dass insbesondere auch bei sehr kleinen Kegelwinkeln oder in engen Bohrungen gemessen werden kann. Mit der Rundsichtoptik kann das Messobjekt in einer einzigen Aufnahme in einem umlaufenden ringförmigen Ausschnitt oder, je nach Beschaffenheit der Oberfläche, sogar vollständig vermessen werden.

Die Rundsichtoptik oder die Bildebnungsoptik kann dabei so gestaltet sein, dass die Oberfläche des Objektes direkt, über eine telezentrische Abbildung oder ein Zwischenbild (gemäß der deutschen Patentanmeldung 199 48 813.4-52) auf den Bildaufnehmer abgebildet wird.

### Zeichnungen

Die Erfindung wird nachfolgend anhand von Ausführungsbeispielen unter Bezugnahme auf die Zeichnungen näher erläutert. Es zeigen:
- Fig. 1A bis 1D: verschiedene Ausbildungsformen für eine Rundsichtoptik einer optischen Messvorrichtung, wobei die Fig. auch Messobjekte mit verschiedenen Oberflächenbereichen zeigen,
- Fig. 2: eine als Weisslichtinterferometer ausgebildete optische Messvorrichtung mit einer Rundsichtoptik nach Fig. 1A und einem geebneten Zwischenbild,
- Fig. 3: eine weitere Ausführungsform der optischen Messvorrichtung, bei der gegenüber der Fig. 2 ein weiteres Zwischenbild erzeugt wird,
- Fig. 4: eine weitere optische Messvorrichtung in Form eines Weisslichtinterferometers, bei dem gegenüber Fig. 2 der Referenzarm abgeändert ist,
- Fig. 5: eine weitere Ausführungsform der optischen Messvorrichtung mit einem Weisslichtinterferometer, bei dem die bei der Tiefenabtastung bewegten Teile (strichliert dargestellt) gegenüber den vorhergehenden Ausführungsbeispielen anders zusammengefasst sind,
- Fig. 6: eine Ausführung der optischen Messvorrichtung mit einem Weisslichtinterferometer, bei dem eine Trennung in Modulationsinterferometer und Sondeninterferometer vorgenommen ist und
- Fig. 7: eine weitere Ausführungsform der optischen Messvorrichtung mit einem in ein Modulationsinterferometer und ein Sondeninterferometer aufgeteilten Weisslichtinterferometer, bei dem gegenüber Fig. 6 der Referenzspiegel des Sondeninterferometers unterschiedlich gestaltet ist.

### Ausführungsbeispiel

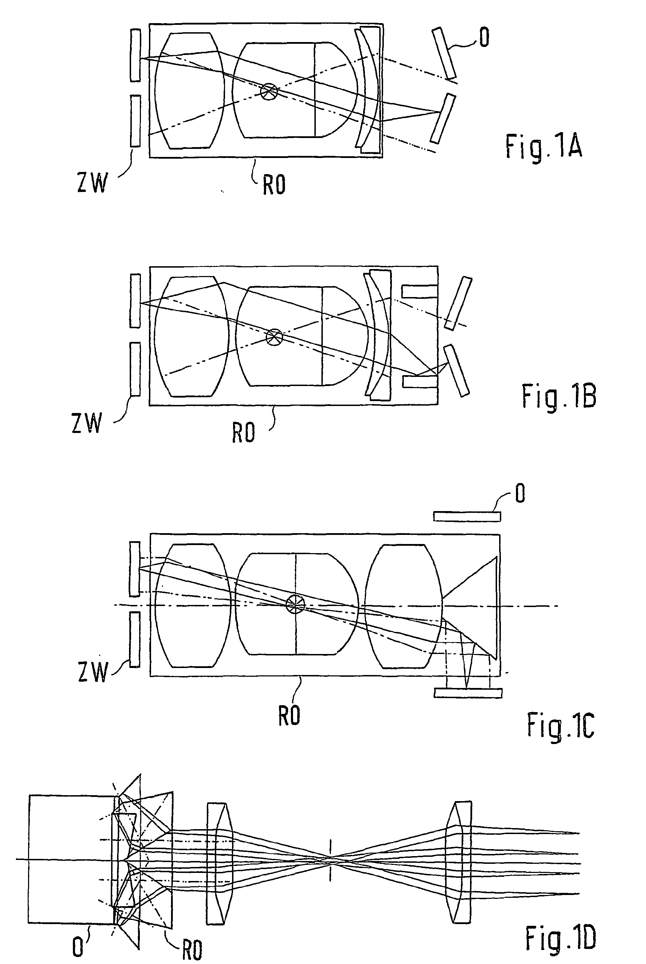

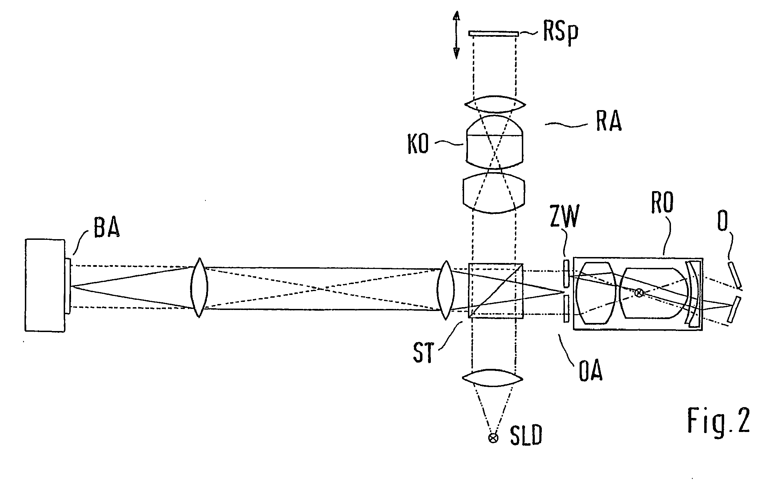

Die Fig. 1A bis 1D zeigen verschiedene Ausbildungsformen einer Rundsichzoptik RO, die in unterschiedlichen Aufbauformen der optischen Messvorrichtung eingesetzt werden können, insbesondere auch den in den Fig. 2 bis 7 gezeigten optischen Messvorrichtungen in Form von Weisslichtinterferometern, (Kurzkohärenzinterferometern).

Wie Fig. 2 zeigt, wird eine für die Messaufgabe geeignet ausgebildete Rundsichtoptik RO in einem Objektarm OA vor einem Messobjekt O bzw. dessen zu vermessenden Oberflächenbereich angeordnet, der vorliegend z.B. die Fläche eines Innenkegels darstellt. Entsprechend kann die Rundsichtoptik RO auch auf die Außenfläche eines Kegels gemäß Fig. 1B oder auf die Innenfläche eines Innenzylinders bzw. einer Bohrung gemäß Fig. 1C oder einen Übergangsbereich zwischen einer Kegelfläche und einer Bohrung gemäß Fig. 1D ausgelegt sein. Die Rundsichtoptik RO kann dabei z.B. ein Objektiv sein, das ähnlich wie ein Weitwinkelobjektiv ausgebildet ist (Winkelvergrößerung stark unterschiedlich von 1) und dabei nahezu als eine telezentrische Anordnung realisiert ist. Die Aperturblende kann außerhalb der Rundsichtoptik RO liegen, und objektseitig kann jeder Strahl eine andere Pupille besitzen. Dadurch werden die parallelen Strahlen der bildseitigen Seite auf der objektseitigen Seite in Strahlen umgewandelt, die senkrecht auf z.B. einer Kegelfläche (oder Zylinderfläche) stehen. Alternativ kann z.B. auch ein klassisches Objektiv verwendet werden, mit einer Winkel- sowie Linearvergrößerung von 1, jedoch mit einem Ablenkungssystem, z.B. einem Axicon. Das Axicon kann entweder ein rotationssymmetrisches Prisma sein, das in Transmission arbeitet, oder ein rotationssymmetrischer Spiegel, der in Reflexion arbeitet. Die Rundsichtoptik RO kann entweder mit sphärischen, asphärischen oder Grin-Linsen, Stablinsen, mit diffraktiven optischen Elementen, Prismen, Spiegeln oder einer Kombination daraus realisiert werden. Auch ist ein Aufbau der Rundsichtoptik denkbar, bei dem ein kreisringförmiger oder auch kreisförmiger Ausschnitt einer flachen Fläche beleuchtet und erfasst wird. Die erfassten Oberflächenbereiche sind dabei radialsymmetrisch.

Außerdem können zwei oder mehr Rundsichtoptiken RO derart angeordnet und ausgelegt sein, dass gleichzeitig außer von einem Oberflächenbereich von mindestens einem weiteren Oberflächenbereich ein geebnetes Bild oder Zwischenbild erzeugbar ist (wie in der deutschen Patentanmeldung 100 33 028.2 angegeben).

Im Referenzlichtweg kann dann ebenfalls entsprechend der Anzahl der weiteren Oberflächenbereiche zum Erzeugen unterschiedlicher optischer Längen mindestens eine weitere Referenzebene (Referenzspiegel) angeordnet sein (gemäß der deutschen Patentanmeldung 100 33 027.4). Mit dieser Anordnung kann z.B. die Lage der Führungsbohrung zu einem räumlich getrennten Ventilsitz gemessen werden.

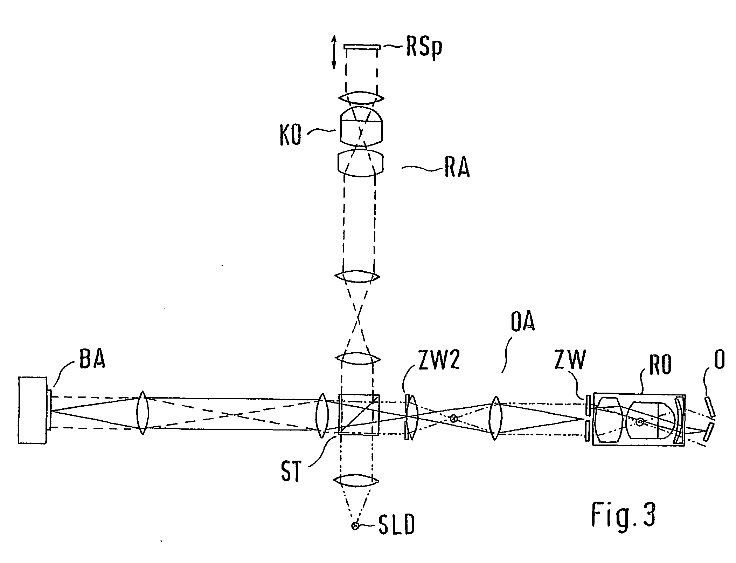

Wird als Messmethode die Weisslichtinterferometrie (Kurzkohärenzinterferometrie) angewandt, kann entsprechend Fig. 2 der Aufbau z.B. als Michelson-Interferometer realisiert werden. Das Licht einer kurzkohärenten Lichtquelle SLD, z.B. einer Superlumineszenzdiode oder Leuchtdiode, wird über einen Strahlteiler ST in die beiden Interferometerarme in Form des Objektarmes OA und des Referenzarmes RA eingekoppelt. Die Beleuchtung des Messobjektes O erfolgt durch die Rundsichtoptik RO hindurch. Dabei ist es günstig, wenn die Beleuchtung der Objektoberfläche durch eine Wellenfront erfolgt, die an die Geometrie des Messobjektes O angepasst ist. Durch die Rundsichtoptik RO wird z.B. ein ringförmiger Ausschnitt (360° umlaufend) der Objektoberfläche durch die Rundsichtoptik RO in eine Ebene abgebildet: es entsteht ein geebnetes Zwischenbild ZW. Das geebnete Zwischenbild kann direkt auf einem Bildaufnehmer BA, z.B. einer CCD-Kamera, erzeugt oder auf diesen abgebildet werden oder über weitere Zwischenabbildungen, wie in Fig. 3 gezeigt. Nach der optoelektrischen Wandlung werden die von der Objektoberfläche erhaltenen Signale in einer (nicht gezeigten) Auswerteeinrichtung geeignet ausgewertet.

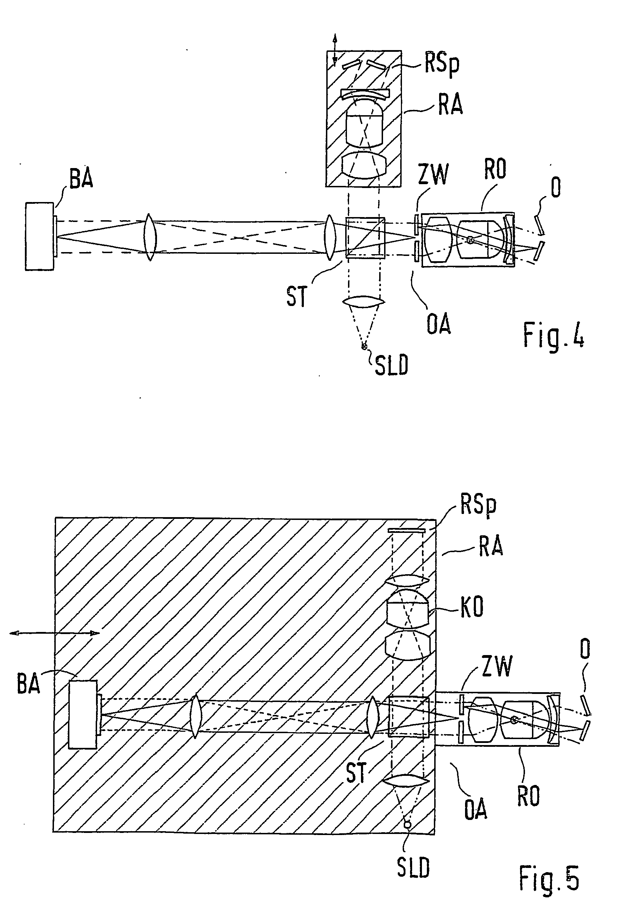

Im Referenzarm RA wird die Referenzwelle von dem entsprechend dem Doppelpfeil bewegten Referenzspiegel RSp reflektiert. Zur Kompensation der Rundsichtoptik RO ist in dem Referenzarm RA eine der Rundsichtoptik RO ähnliche oder entsprechende Kompensationsoptik KO eingesetzt, die vorliegend jedoch einen ebenen Referenzspiegel RSp wieder in eine Ebene abbildet. Wird zur Kompensation eine zur Rundsichtoptik RO identische Optik eingesetzt, ist ein Referenzspiegel zu verwenden, der nahezu dieselbe Geometrie aufweist wie die zu messende Objektoberfläche, wie in Fig. 4 gezeigt.

Auf dem Bildaufnehmer BA wird das überlagerte Bild der Objektoberfläche mit der Referenzwelle aufgenommen.

Zur Messung erfolgt eine Änderung des Gangunterschieds zwischen den optischen Weglängen im Objektarm OA und Referenzarm RA (Tiefenabtastung, Tiefenscan) wie an sich bekannt (z.B. Scan des Referenzspiegels RSp, Scan des Objektes, Zwischenbildscan gemäß der eingangs genannten deutschen Patentanmeldung 100 15 878.1, Scan durch akustooptische Modulatoren gemäß der DE 197 21 842 C2).

Im Falle der Weisslichtinterferometrie kann der Tiefenscan bei Verwendung eines ebenen Referenzspiegels RSp (Fig. 2) oder eines an die Geometrie der Objektoberfläche angepassten Referenzspiegels RSp (Fig. 4) durch ein Verschieben nur des Referenzspiegels RSp oder des Referenzspiegels RSp mit der kompensierenden Optik erfolgen, wie in Fig. 4 gezeigt (strichlierter Bereich). Die Rundsichtoptik RO kann auch als sogenannte Bajonettoptik (gemäß der deutschen Patentanmeldung 100 15 878.1) eingesetzt werden. Der Tiefenscan erfolgt dann, indem das geebnete Zwischenbild ZW von einer beweglichen ObjektivOptik in Tiefenrichtung abgetastet wird, wie Fig. 5 zeigt, wo der bewegte Teil (wie auch in Fig. 4) strichliert dargestellt ist.

In dem Bild der Objektoberfläche auf dem Bildaufnehmer BA tritt hoher Interferenzkontrast dann auf, wenn der Gangunterschied in beiden Interferenzarmen OA, RA kleiner als die Kohärenzlänge ist. Zur Gewinnung des 3D-Höhenprofils der Objektoberfläche haben sich verschiedene Verfahren etabliert, wie der eingangs angegebene Stand der Technik zur Weisslichtinterferometrie zeigt.

Diese Verfahren beruhen darauf, dass zur Messung die optische Weglänge des Objektlichtweges relativ zu der optischen Weglänge des Referenzlichtweges geändert wird und für jeden Messpunkt das Interferogramm einer Auswertung zugeführt wird.

In den Aufbau gemäß Fig. 3 ist gegenüber dem Aufbau gemäß Fig. 2 in dem Objektarm OA mittels nicht näher bezeichneter Abbildungselemente ein weiteres Zwischenbild ZW2 erzeugt. Zur Kompensation sind in dem Referenzarm RA entsprechende optische Elemente angeordnet. Weitere nicht näher bezeichnete Abbildungselemente sind zwischen dem Strahlteiler ST und dem Bildaufnehmer BA (wie auch in Fig. 2 und den übrigen Fig.) vorgesehen.

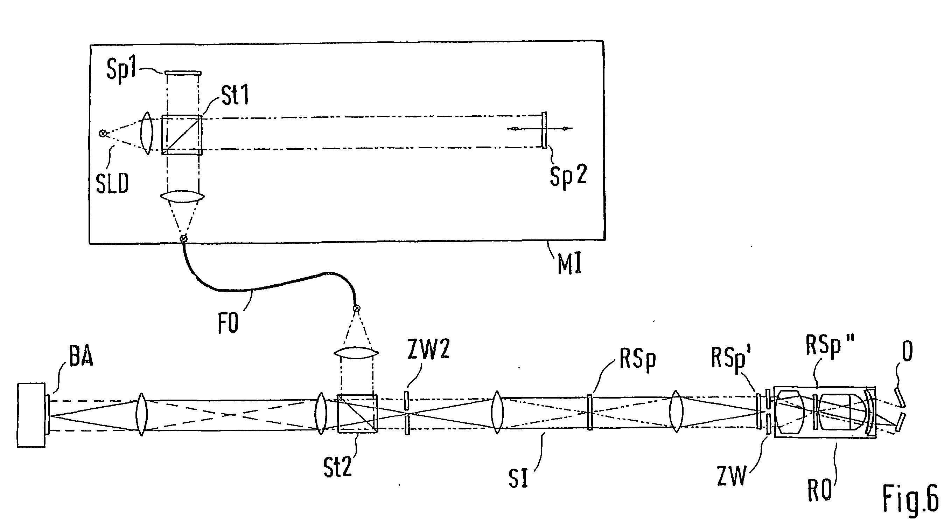

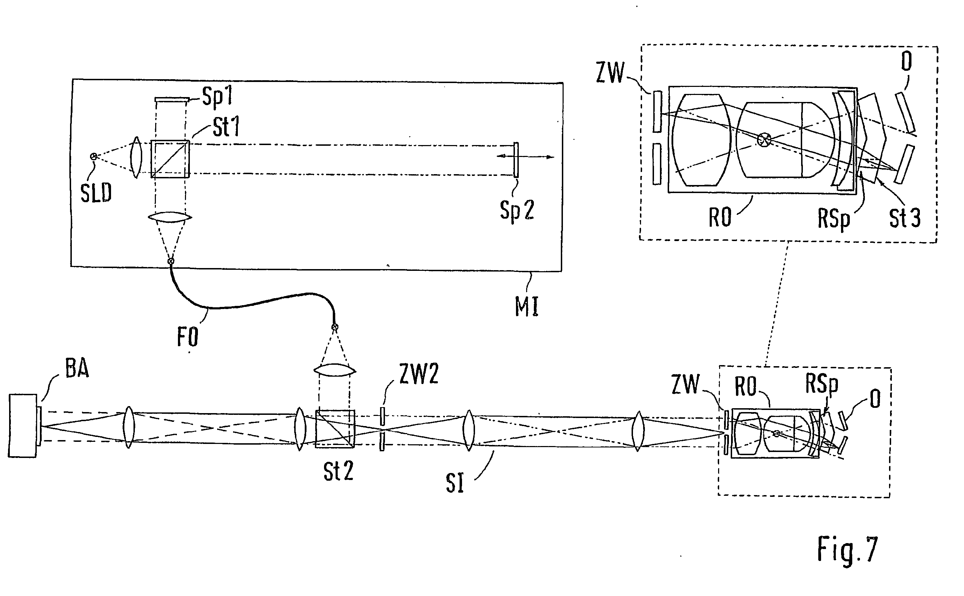

In einem modifizierten Aufbau gemäß den Fig. 6 und 7 ist das Weisslichtinterferometer als sogenannte "Common Path"-Anordnung realisiert. Das Weisslichtinterferometer wird wieder mit einer breitbandigen (kurzkohärenten) Lichtquelle SLD beleuchtet. Ein erster Strahlteiler Sp teilt das Licht in zwei Arme auf, die einen ersten und einen zweiten Spiegel Sp1, Sp2 aufweisen. Dieses Teil-Interferometer wird im Weiteren als Modulations-Interferometer MI bezeichnet. Der optische Gangunterschied zwischen den beiden Armen ist größer als die Kohärenzlänge der Lichtquelle SLD.

Von den beiden Spiegeln Sp1, Sp2 aus wird das reflektierte Licht über den ersten Strahlteiler St1 und einen zweiten Strahlteiler St2 in eine optische Sonde (z.B. Endoskop) eingespeist. Dieses Teil-Interferometer, bestehend aus dem Referenzspiegel RSp und dem Strahlengang zu dem Messobjekt O mit den vorgesehenen optischen Bauelementen wird im Weiteren als Sonden-Interferometer SI bezeichnet. Eine Besonderheit dieses Aufbaus besteht darin, dass sich der Referenzspiegel RSp in der optischen Sonde selbst befindet und an unterschiedlichen Positionen (RSp', RSp") angeordnet sein kann. Ein Teil des Lichtes wird an diesem Referenzspiegel RSp (bzw. RSp', RSp") reflektiert, während der andere Teil des Lichtes den zu vermessenden Oberflächenbereich des Messobjekts O beleuchtet. Der Referenzspiegel RSp kann auf einer Planplatte aufgebracht sein oder z.B. auf einem Prisma. Der im Modulations-Interferometer MI vorgegebene Gangunterschied wird im Sonden-Interferometer SI durch entsprechende Anordnung des Referenzspiegels wieder rückgängig gemacht.

Alternativ kann das Sonden-Interferometer Sl auch als Mirau-Interferometer realisiert werden, wie Fig. 7 zeigt. Das Messobjekt O wird mittels der Rundsichtoptik RO, die z.B. an eine kegelförmige Objektoberfläche angepasst ist, gegebenenfalls über Zwischenabbildungen ZW, ZW2, auf den Bildaufnehmer BA abgebildet und mit der Referenzwelle überlagert. Zur Gewinnung der Höheninformation wird der Spiegel Sp2 über den Messbereich gescant. Im Bild des Messobjektes O tritt hoher Interferenzkontrast dann auf, wenn der Gangunterschied zwischen den beiden Spiegeln Sp1 und Sp2 genau dem optischen Gangunterschied zwischen dem Referenzspiegel RSp und dem Messobjekt O ist. Zur Gewinnung des 3D-Höhenprofils werden etablierte Verfahren zur Auswertung der Interferogramme in jedem Bildpunkt verwendet. Dieser Aufbau hat den Vorteil, dass Objekt- und Referenzwelle nahezu die identische Optik durchlaufen, wodurch sich Aberrationen weitgehend kompensieren. Außerdem ist diese Anordnung robuster gegen mechanische Erschütterungen.

Wie die Fig. 6 und 7 weiter zeigen, erfolgt die Ankopplung des Modulations-Inter-ferometers MI an das Sonden-Interferometer SI über eine Faseroptik FO; stattdessen kann die Ankopplung über eine Freistrahloptik erfolgen.

Alternativ kann die optische Weglänge im Referenzarm RA auch durch akustooptische Modulatoren geändert (durchgescant) werden (vgl. DE 197 21 842 C2).

Als weiteres Ausführungsbeispiel kann das Common-Path-Interferometer in Mirau-Anordnung auch ohne Modulations-Interferometer MI verwirklicht werden. Die Lichtquelle SLD kann dann direkt in das Sonden-Interferometer SI eingekoppelt werden, z.B. über den Strahlteiler St2 gemäß Fig. 7. Für den Tiefenscan muss dann der tatsächliche Referenzspiegel gegen den Strahlteiler bewegt werden. In Fig. 7 ist der Referenzspiegel RSp des Sonden-Interferometers SI zwischen der Rundsichtoptik RO und dem Messobjekt O in entsprechend angepasster Form gezeigt und ein dritter Strahlteiler St3 angegeben und in einer Teilskizze vergrößert dargestellt.

Bei anderen (hier nicht gezeigten) interferometrischen Verfahren (z.B. der klassischen Interferometrie, der Heterodyn-Interferometrie, der Speckle-Interferometrie) oder ESPI gelten entsprechende Adaptionen für den Tiefenscan bzw. für die Auswertung.

Entsprechende Aufbauten und Maßnahmen können auch in Verbindung mit einer Bildebnungsoptik ergriffen werden, die lediglich einen Teilausschnitt aus einer gekrümmten Oberfläche aufnimmt, ansonsten aber entsprechend der Rundsichtoptik RO in die Messvorrichtung eingebunden ist.

## Patentansprüche

1. Optische Messvorrichtung mit einer 3-D-Messeinrichtung zur dreidimensionalen Formvermessung an Oberflächen von Messobjekten (0) unter Tiefenabtastung und einer eine Objektivoptik aufweisenden Projektionsoptik, wobei das Messobjekt (0) durch eine Lichtquelle (SLD) über einen Beleuchtungsstrahlengang mit einer Beleuchtungsoptik beleuchtet wird und die 3-D-Messeinrichtung als eine interferometrische Messeinrichtung ausgebildet ist,
**dadurch gekennzeichnet,**
**dass** die Objektivoptik als Bildebnungsoptik zum Erfassen und Ebnen eines gekrümmten Oberflächenbereichs oder als Rundsichtoptik (RO) zum Erfassen eines um 360° umlaufenden radialsymmetrischen Oberflächenbereichs ausgebildet ist und
**dass** die Rundsichtoptik (RO) oder die Bildebnungsoptik derart ausgebildet ist, dass der erfasste Oberflächenbereich in einer Ebene als geebnetes Zwischenbild abgebildet wird.

2. Messvorrichtung nach Anspruch 1,
**dadurch gekennzeichnet,**
**dass** die Beleuchtungsoptik, die die Rundsichtoptik (RO) oder die Bildebnungsoptik und weitere Optiken enthält, derart ausgebildet sind, dass die das Messobjekt (O) beleuchtende Wellenfront an die Geometrie des Oberflächenbereichs angepasst ist, so dass die Beleuchtungsstrahlen senkrecht auf den Oberflächenbereich auftreffen.

3. Messvorrichtung nach einem der vorhergehenden Ansprüche,
**dadurch gekennzeichnet,**
**dass** die Rundsichtoptik (RO) oder die Bildebnungsoptik entsprechend einem Weitwinkelobjektiv ausgebildet ist, mit einer Winkelvergrößerung wesentlich größer als Eins und als telezentrische Anordnung ausgestaltet ist oder
**dass** die Rundsichtoptik (RO) als Normalobjektiv mit einer Winkel- und Linearvergrößerung von Eins und einer Ablenkungsanordnung ausgebildet ist.

4. Messvorrichtung nach Anspruch 3,
**dadurch gekennzeichnet,**
**dass** die Ablenkungsanordnung als Axicon ausgebildet ist, das als ein rotationssymmetrisches Prisma oder ein rotationssymmetrischer Spiegel ausgelegt ist.

5. Messvorrichtung nach einem der vorhergehenden Ansprüche,
**dadurch gekennzeichnet,**
**dass** die Rundsichtoptik (RO) oder die Bildebnungsoptik mit sphärischen, asphärischen oder Grin-Linsen, Stablinsen, mit diffraktiven optischen Elementen, Prismen, Spiegel oder mit einer Kombination aus einem Teil oder allen diesen Komponenten gestaltet sind.

6. Messvorrichtung nach einem der vorhergehenden Ansprüche,
**dadurch gekennzeichnet,**
**dass** die interferometrische Messeinrichtung als an sich bekanntes normales Interferometer, Heterodyninterferometer oder Weißlichtinterferometer, das eine kurzkohärente Lichtquelle (SLD) aufweist, ausgebildet ist.

7. Messvorrichtung nach Anspruch 6,
**dadurch gekennzeichnet,**
**dass** das Weißlichtinterferometer einen Objektarm (OA), in dem die Rundsichtoptik (RO) oder die Bildebnungsoptik angeordnet ist und über den zumindest teilweise der Beleuchtungsstrahlengang verläuft, und einen Referenzarm (RA) mit einem Referenzspiegel (RSp) aufweist und
**dass** der Referenzarm (RA) und der Objektarm (OA) sich voneinander räumlich getrennt erstrecken oder räumlich ineinander in einer Common-Path-Anordnung integriert sind.

8. Messeinrichtung nach Anspruch 7,
**dadurch gekennzeichnet,**
**dass** in dem Referenzarm (RA) eine der Rundsichtoptik (RO) bzw. der Bildebnungsoptik ähnliche oder entsprechende Optik eingesetzt ist.

9. Messvorrichtung nach Anspruch 7 oder 8,
**dadurch gekennzeichnet,**
**dass** das Weißlichtinterferometer in ein Modulationsinterferometer (MI) und ein daran über eine Faseroptik (FO) oder eine Freistrahloptik angekoppeltes Sondeninterferometer (SI) mit der Rundsichtoptik (RO) oder der Bildebnungsoptik unterteilt ist.

10. Messvorrichtung nach einem der Ansprüche 6 bis 9,
**dadurch gekennzeichnet,**
**dass** eine relative Änderung der optischen Weglänge zwischen Objektlichtweg und Referenzlichtweg bei dem Weißlichtinterferometer durch Bewegen einer Referenzebene (RSp), durch Bewegen des Objektes, durch Bewegen des Interferometers, durch Änderung der optischen Weglänge im Referenzarm (RA) mittels eines akustooptischen Modulators oder durch Tiefenabtastung des Zwischenbildes (ZW) erfolgt.

11. Messvorrichtung nach einem der Ansprüche 6 bis 10,
**dadurch gekennzeichnet,**
**dass** sich im Objektarm (OA) eine bezüglich des Messobjekts (0) starre Optik befindet und
**dass** der starren Optik eine in Richtung ihrer optischen Achse bewegliche Optik folgt.

12. Messvorrichtung nach Anspruch 11,
**dadurch gekennzeichnet,**
**dass** die starre Optik ganz oder teilweise als Endoskop ausgebildet ist.

13. Messvorrichtung nach Anspruch 11 oder 12,
**dadurch gekennzeichnet,**
**dass** die starre Optik Teil einer das Zwischenbild (ZW) erzeugenden Optik ist.

14. Messvorrichtung nach einem der Ansprüche 11 bis 13,
**dadurch gekennzeichnet,**
**dass** die starre Optik Teil der Bildebnungsoptik oder der Rundsichtoptik (RO) ist.

15. Messvorrichtung nach einem der Ansprüche 11 bis 14,
**dadurch gekennzeichnet,**
**dass** die starre Optik das Messobjekt (O) nach Unendlich abbildet.

16. Messvorrichtung nach einem der Ansprüche 6 bis 15,
**dadurch gekennzeichnet,**
**dass** ein Bild der Referenzebene (RSp) des Referenzarms (RA) im Schärfentiefebereich der Rundsichtoptik (RO) oder der Bildebnungsoptik liegt.

17. Messeinrichtung nach Anspruch 16,
**dadurch gekennzeichnet,**
**dass** das Bild der Referenzebene (RSp) in der Bildebene der Rundsichtoptik (RO) oder der Bildebnungsoptik liegt.

18. Messvorrichtung nach Anspruch 16 oder 17,
**dadurch gekennzeichnet,**
**dass** sich das Bild der Referenzebene (RSp) bei Bewegung der beweglichen Optik synchron mit der Bildebene der Rundsichtoptik (RO) oder Bildebnungsoptik bewegt.

19. Messvorrichtung nach einem der Ansprüche 11 bis 18,
**dadurch gekennzeichnet,**
**dass** die starre Optik als Rundsichtoptik (RO) oder Bildebnungsoptik ausgebildet ist, mit der mindestens ein zum Messobjekt (O) starres Zwischenbild erzeugt wird, und
**dass** als bewegliche Optik eine im Strahlengang hinter dem starren Zwischenbild folgende Objektivoptik in Richtung ihrer optischen Achse beweglich zur Abtastung des normalen zu dieser Achse ausgerichteten Zwischenbilds (ZW) in Tiefenrichtung und Abbilden desselben direkt oder über eine oder mehrere Zwischenabbildungen auf den Bildaufnehmer (BA) ausgebildet ist.

20. Messvorrichtung nach Anspruch 19,
**dadurch gekennzeichnet,**
**dass** die Zwischenabbildung einen für alle im Zwischenbild abgebildeten Objektpunkte den gleichen Abbildungsmaßstab besitzt.

21. Messvorrichtung nach Anspruch 20,
**dadurch gekennzeichnet,**
**dass** die starre Optik als 4f-Anordnung ausgebildet ist.

22. Messvorrichtung nach einem der Ansprüche 6 bis 21,
**dadurch gekennzeichnet,**
**dass** mindestens zwei Rundsichtoptiken (RO) oder Bildebnungsoptiken vorgesehen und derart ausgelegt sind, dass gleichzeitig von mindestens zwei Oberflächenbereichen ein geebnetes Bild oder Zwischenbild (ZW) erzeugbar ist, wobei in dem Referenzarm (RA) eine Referenz vorgesehen ist und die Auswertung der Bilder oder Zwischenbilder zeitlich aufeinander folgend erfolgt oder eine der Anzahl der Rundsichtoptiken (RO) oder Bildebnungsoptiken entsprechende Anzahl von zugeordneten Referenzebenen vorgesehen sind und die Auswertung synchron erfolgt.

## Claims

1. Optical measuring apparatus comprising a 3-D measuring device for carrying out three dimensional shape measurement on surfaces of measurement objects (O) with depth scanning and projection optics provided with objective optics, in which the measurement object (0) is illuminated by a light source (SLD) over an illuminating beam path using illuminating optics and the 3-D measuring device is configured as an interferometric measuring device,
**characterized in**
**that** the objective optics are configured as image flattening optics for detecting and flattening a curved surface area or as panoramic optics (RO) for detecting a radially symmetrical surface area extending through 360º and
in that the panoramic optics (RO) or the image flattening optics are configured in such a way, that the detected surface area is imaged on a plane as a flattened intermediate image.

2. Measuring apparatus according to Claim 1,
**characterized in**
**that** the illuminating optics comprising the panoramic optics (RO) or the image flattening optics and further optics is configured in such a way that the wavefront illuminating the measurement object (O) is matched to the geometry of the surface area, so that the illuminating beams strike the surface area at right angles.

3. Measuring apparatus according to one of the preceding claims,
**characterized in**
**that** the panoramic optics (RO) or the image flattening optics are configured corresponding to a wide angle objective with an angular magnification much greater than one and designed as a telecentric arrangement or
in that the panoramic optics (RO) are configured as a normal angle objective with an angular and linear magnification of one and as a deflection arrangement.

4. Measuring apparatus according to Claim 3,
**characterized in**
**that** the deflection arrangement is configured as an axicon, which is designed as a rotationally symmetrical prism or a rotationally symmetrical mirror.

5. Measuring apparatus according to one of the preceding claims,
**characterized in**
**that** the panoramic optics (RO) or the image flattening optics are formed with spherical, aspherical or GRIN lenses, rod lenses, with diffractive optical elements, prisms, mirrors or with a combination of some or all of these components.

6. Measuring apparatus according to one of the preceding claims,
**characterized in**
**that** the interferometric measuring device is configured as a known normal interferometer, heterodyne interferometer, or white light interferometer, which has a low coherence light source (SLD).

7. Measuring apparatus according to Claim 6,
**characterized in**
**that** the white light interferometer has an measurement object arm (OA), in which the panoramic optics (RO) or the image flattening optics are arranged and over which at least part of the imaging beam path runs, and a reference arm (RA) with a reference mirror (RSp) and
in that the reference arm (RA) and the measurement object arm (OA) extend spatially separated from one another or are spatially integrated in one another in a common path arrangement.

8. Measuring apparatus according to Claim 7,
**characterized in**
**that** optics similar or equivalent to the panoramic optics (RO) or the image flattening optics are inserted into the reference arm (RA).

9. Measuring apparatus according to Claim 7 or 8,
**characterized in**
**that** the white light interferometer is subdivided into a modulation interferometer (MI) and a probe interferometer (SI), comprising the panoramic optics (RO) or the image flattening optics, connected to said modulation interferometer (MI) via fibre optics (FO) or free-beam optics.

10. Measuring apparatus according to one of Claims 6 to 9,
**characterized in**
**that** a relative change in the optical path length between measurement object light path and reference path length occurs in the case of the white light interferometer through movement of a reference plane (RSp); through movement of the measurement obj ect; through movement of the interferometer; through a change in the optical path length in the reference arm (RA) with use of an acoustooptic modulator or through depth scanning of the intermediate image (ZW).

11. Measuring apparatus according to one of Claims 6 to 10,
**characterized in**
**that** optics which are rigid with respect to the measurement object (O) are located in the measurement object arm (OA) and in
**that** optics which are movable in the direction of their optical axis follow rigid optics.

12. Measuring apparatus according to Claim 11,
**characterized in**
**that** the rigid optics are partly or wholly configured as an endoscope.

13. Measuring apparatus according to Claim 11 or 12,
**characterized in**
**that** the rigid optics are part of the intermediate image (ZW) producing optics.

14. Measuring apparatus according to one of Claims 11 to 13,
**characterized in**
**that** the rigid optics are part of the image flattening optics or the panoramic optics (RO).

15. Measuring apparatus according to one of Claims 11 to 14,
**characterized in**
**that** the rigid optics image the measurement object (0) at infinity.

16. Measuring apparatus according to one of Claims 6 to 15,
**characterized in**
**that** an image of the reference plane (RSp) of the reference arm (RA) lies in the depth of field of the panoramic optics (RO) or the image flattening optics.

17. Measuring apparatus according to Claim 16,
**characterized in**
**that** the image of the reference plane (RSp) lies on the image plane of the panoramic optics (RO) or the image flattening optics.

18. Measuring apparatus according to Claim 16 or 17,
**characterized in**
**that**, during movement of the movable optics, the image of the reference plane (RSp) moves synchronously with the image plane of the panoramic optics (RO) or the image flattening optics.

19. Measuring apparatus according to one of Claims 11 to 18,
**characterized in**
**that** the rigid optics are configured as panoramic optics (RO) or image flattening optics, with which at least one intermediate image which is rigid with respect to the measurement object (0) is produced, and
in that the objective optics are configured as movable optics, said objective optics follow downstream in the beam path from the rigid intermediate image, are movable in direction of its optical axis for scanning of the intermediate image (ZW), which is arranged normally to this axis, in the depth direction and image said intermediate image directly or via one or several intermediate images on the image sensor (BA).

20. Measuring apparatus according to Claim 19,
**characterized in**
**that** the intermediate image has the same linear magnification for all measurement object points imaged in the intermediate image.

21. Measuring apparatus according to Claim 20,
**characterized in**
**that** the rigid optics are configured as a 4f arrangement.

22. Measuring apparatus according to one of Claims 6 to 21,
**characterized in**
**that** at least two panoramic optics (RO) or image flattening optics are provided and arranged in such a manner that a flattened image or intermediate image (ZW) can be produced at the same time from at least two surface areas, in which a reference is provided in the reference arm (RA) and the images or intermediate images are evaluated successively, or a number of associated reference planes are provided, corresponding to the number of panoramic optics (RO) or image flattening optics, and the evaluation is carried out synchronously.

## Revendications

1. Dispositif de mesure optique comprenant une installation de mesure 3D pour la mesure de formes en trois dimensions de surfaces d'objets de mesure (0) avec détection en profondeur et une optique de projection ayant un objectif, l'objet de mesure (0) étant éclairé par une source lumineuse (SDL) par un chemin de faisceaux d'éclairage avec une optique d'éclairage et l'installation de mesure 3D est une installation de mesure interférométrique,
**caractérisé en ce que**
l'objectif est une optique d'imagerie pour saisir et aplanir une zone de surface supérieure, courbe, ou comme optique de vision circulaire (RO) pour saisir une plage de surface à symétrie radiale, sur 360° de périphérie, et
l'optique de vision circulaire (RO) ou l'optique d'aplanissement d'image sont réalisées pour que la zone de surface supérieure saisie donne une image dans un plan comme image intermédiaire aplanie.

2. Dispositif de mesure selon la revendication 1,
**caractérisé en ce que**
l'optique d'éclairage, qui comprend l'optique de vision circulaire (RO) ou l'optique d'aplanissement d'image ainsi que d'autres optiques, est réalisée de façon que le front d'onde éclairant l'objet de mesure (O) soit adapté à la géométrie de la plage de surface supérieure pour que les rayons d'éclairage arrivent perpendiculairement à la plage de surface supérieure.

3. Dispositif de mesure selon l'une des revendications précédentes,
**caractérisé en ce que**
l'optique de vision circulaire (RO) ou l'optique d'aplanissement d'image sont réalisées comme objectifs grand angulaire avec un agrandissement d'angle très supérieur à l'unité et comme objectif télécentré ou l'optique de vision circulaire (RO) est un objectif normal avec un agrandissement angulaire et linéaire de l'unité et un dispositif de déviation.

4. Dispositif de mesure selon la revendication 3,
**caractérisé en ce que**
le dispositif de déviation est réalisé sous la forme d'une optique axicon sous la forme d'un prisme à symétrie de rotation ou d'un miroir à symétrie de rotation.

5. Dispositif de mesure selon l'une des revendications précédentes,
**caractérisé en ce que**
l'optique de vision circulaire (RO) ou l'optique d'aplanissement d'image comportent des lentilles sphériques, des lentilles asphériques ou des lentilles à gradient d'indices Grin, les lentilles-tiges, des éléments optiques de diffraction, des prismes, des miroirs ou une combinaison d'une partie ou de tous ces composants.

6. Dispositif de mesure selon l'une des revendications précédentes,
**caractérisé en ce que**
l'installation de mesure interférométrique est réalisée comme un interféromètre normal connu, comme interféromètre hétérodyne ou comme interféromètre à lumière blanche ayant une source de lumière cohérente (SLD).

7. Dispositif de mesure selon la revendication 6,
**caractérisé en ce que**
l'interféromètre à lumière blanche comporte un bras objet (OA) muni de l'optique de vision circulaire (RO) ou de l'optique d'aplanissement d'image et il passe au moins en partie par le chemin du faisceau d'éclairage et comporte un bras de référence (RA) avec un miroir de référence (RSp) et
le bras de référence (RA) et le bras objet (OA) s'étendent séparément l'un de l'autre dans l'espace ou sont intégrés l'un dans l'autre dans l'espace dans un dispositif de chemin commun.

8. Installation de mesure selon la revendication 7,
**caractérisée en ce que**
le bras de référence (RA) comporte une optique analogue à une optique de vision circulaire (RO) ou une optique d'aplanissement d'image ou une optique analogue.

9. Installation de mesure selon les revendications 7 ou 8,
**caractérisée en ce que**
l'interféromètre de lumière blanche est subdivisé en un interféromètre à modulation (MI) et un interféromètre à sonde (SI) couplé par des fibres optiques (FO) ou un chemin optique libre, à une optique de vision circulaire (RO) ou une optique d'aplanissement d'image.

10. Dispositif de mesure selon l'une des revendications 6 à 9,
**caractérisé par**
une variation relative de la longueur d'onde optique entre le chemin de la lumière objet et le chemin de la lumière de référence pour un interféromètre de lumière blanche obtenue par un mouvement d'un point de référence (RSp), par un mouvement de l'objet, par mouvement de l'interféromètre, par variation de la longueur d'onde optique dans le bras de référence (RA), par un modulateur acoustique-optique ou par détection en profondeur de l'image intermédiaire (ZW).

11. Dispositif de mesure selon l'une des revendications 6 à 10,
**caractérisé en ce que**
le bras objet (OA) comporte une optique fixe par rapport à l'objet de mesure (0) et
l'optique fixe est suivie par une optique mobile dans la direction selon l'axe optique.

12. Dispositif de mesure selon la revendication 11,
**caractérisé en ce que**
l'optique fixe est totalement ou partiellement réalisée sous la forme d'un endoscope.

13. Dispositif de mesure selon la revendication 11 ou 12,
**caractérisé en ce que**
l'optique fixe fait partie d'une optique formant l'image intermédiaire (ZW).

14. Dispositif de mesure selon l'une des revendications 11 à 13,
**caractérisé en ce que**
l'optique fixe fait partie de l'optique d'aplanissement d'image ou de l'optique de vision circulaire (RO).

15. Dispositif de mesure selon l'une des revendications 11 à 14,
**caractérisé en ce que**
l'optique fixe donne une image de l'objet de mesure (O) rejetée à l'infini.

16. Dispositif de mesure selon l'une des revendications 6 à 15,
**caractérisé en ce qu'**
une image du plan de référence (RSp) du bras de référence (RA) se situe dans la plage de profondeur de champ de l'optique de vision circulaire (RO) ou de l'optique d'aplanissement d'image.

17. Dispositif de mesure selon la revendication 16,
**caractérisé en ce que**
l'image du plan de référence (RSp) se situe dans le plan image de l'optique de vision circulaire (RO) ou de l'optique d'aplanissement d'image.

18. Dispositif de mesure selon la revendication 16 ou 17,
**caractérisé en ce que**
l'image du plan de référence (RSp) se déplace avec le mouvement de l'optique mobile en synchronisme avec le plan image de l'optique de vision circulaire (RO) ou de l'optique d'aplanissement d'image.

19. Dispositif de mesure selon l'une des revendications 11 à 18,
**caractérisé en ce que**
l'optique fixe est une optique de vision circulaire (RO) ou une optique d'aplanissement d'image formant au moins une image intermédiaire fixe par rapport à l'objet de mesure (O) et
l'optique mobile est un objectif situé derrière l'image intermédiaire fixe dans le chemin des rayons, cet objectif étant mobile dans la direction de son axe optique pour détecter l'image intermédiaire (ZW) alignée perpendiculairement à cet axe, dans la direction en profondeur, et pour former une image de celle-ci directement ou avec une ou plusieurs images intermédiaires sur le capteur d'image (BA).

20. Dispositif de mesure selon la revendication 19,
**caractérisé en ce que**
l'image intermédiaire a la même échelle d'image pour tous les points objets de l'image intermédiaire.

21. Dispositif de mesure selon la revendication 20,
**caractérisé en ce que**
l'optique fixe est une optique 4f.

22. Dispositif de mesure selon l'une des revendications 6 à 21,
**caractérisé par**
au moins deux optiques de vision circulaires (RO) ou optiques d'aplanissement d'image conçue de façon à générer simultanément une image plane ou une image intermédiaire (ZW) d'au moins deux plages de surfaces supérieures,
et dans le bras de référence (RA) il y a une référence et l'exploitation des images ou des images intermédiaires se fait successivement dans le temps ou encore il est prévu un nombre de plans de référence correspondant au nombre des optiques de vision circulaire (RO) ou d'optiques d'aplanissement d'image et l'exploitation se fait en synchronisme.
